# EUROPÄISCHE PATENTSCHRIFT

(11) **EP 2 137 048 B1**
(45) Veröffentlichungstag und Bekanntmachung des Hinweises auf die Patenterteilung: **23.12.2015**
(21) Anmeldenummer: 08735324.9
(22) Anmeldetag: 18.04.2008
(51) Int. Cl.: B62D 21/15, B62D 25/04, B62D 29/00

(54) **KAROSSERIEBAUTEIL FÜR EINEN KRAFTWAGEN**
CHASSIS COMPONENT FOR A MOTOR VEHICLE
COMPOSANT DE CARROSSERIE POUR UN VÉHICULE AUTOMOBILE

(30) Priorität: 19.04.2007 DE 102007018459
(43) Veröffentlichungstag der Anmeldung: 30.12.2009
(73) Patentinhaber: Audi AG, 85045 Ingolstadt (DE)
(72) Erfinder: CARLE, Daniel, 74861 Neudenau (DE); ELEND, Lutz-Eike, 74229 Oedheim (DE); VENIER, Frank, 74189 Weinsberg (DE)
(74) Vertreter: Patzelt, Heike Anna Maria
(86) Internationale Anmeldenummer: PCT/EP2008/003136
(87) Internationale Veröffentlichungsnummer: WO 2008/128721

(56) Entgegenhaltungen:
- DE-A1- 19 633 911
- DE-A1-102006 045 494
- GB-A- 1 246 995
- US-A- 5 560 672
- US-B1- 6 679 540

## Beschreibung

Die Erfindung betrifft ein Karosseriebauteil für einen Kraftwagen der im Oberbegriff des Patentanspruchs 1 angegebenen Art.

Aus der GB 1 246 995 ist bereits ein derartiges Karosseriebauteil als bekannt zu entnehmen, welches aus mehreren Einzelbauteilen zusammengesetzt ist. Unter anderem umfasst das Karosseriebauteil dabei zwei Blechschalen, welche zu einem inneren Trägerbereich des Karosseriebauteils zusammengefügt sind. Des Weiteren umfasst das als Seitenschweller ausgebildete Karosseriebauteil eine äußere Schwellerverkleidung, welche aus einem Kunststoff hergestellt ist. Insgesamt ist somit ein eine Mehrzahl von Hohlkammern aufweisendes Verbundbauteil geschaffen, wobei die Schwellerverkleidung aus Kunststoff allerdings keinen Beitrag zur Aussteifung der Karosserie bzw. zum Absorptionsvermögen im Falle eines Aufpralls beiträgt.

Auch ist aus der DE 196 33 911 A1 ein Karosseriebauteil zu entnehmen, welches aus zwei Einzelbauteilen gebildet ist.

Aufgabe der vorliegenden Erfindung ist es, ein Karosseriebauteil der eingangs genannten Art zu schaffen, welches insbesondere verbesserte Crash- und Steifigkeitseigenschaften aufweist.

Diese Aufgabe wird erfindungsgemäß durch ein Karosseriebauteil mit den Merkmalen des Patentanspruchs 1 gelöst. Vorteilhafte Ausgestaltungen mit zweckmäßigen und nicht-trivialen Weiterbildungen der Erfindung sind in den übrigen Patentansprüchen angegeben.

Um ein hinsichtlich seiner Crasheigenschaften und Steifigkeitseigenschaften optimiertes Karosseriebauteil zu schaffen, ist es erfindungsgemäß vorgesehen, dass das Karosseriebauteil aus wenigsten einem ersten und einem zweiten Einzelbauteil zu einem eine Mehrzahl von Hohlkammern aufweisenden Verbundbauteil zusammengesetzt ist, wobei das erste Einzelbauteil eine gegenüber dem zweiten Einzelbauteil erhöhte Duktilität zur Absorption einer unfallbedingten Aufprallenergie und das zweite Einzelbauteil, das zur Abstützung des ersten Einzelbauteils ausgebildet ist, eine demgegenüber erhöhte Steifigkeit aufweist, wobei das erste und das zweite Einzelbauteil aus unterschiedlichen Werkstoffen gebildet sind, und wobei freie Enden von freien Schenkeln des ersten Einzelbauteils formschlüssig mit korrespondierenden Stufen des zweiten Einzelbauteils verbunden sind. Das die erhöhte Duktilität aufweisende Einzelbauteil hat somit den Vorteil, dass es sich bei einer unfallbedingten Kraftbeaufschlagung sehr kontrolliert duktil verformt und dabei Energien verzehrt. Hingegen ist durch das erhöhte Steifigkeit aufweisende weitere Einzelbauteil eine zuverlässige Abstützung des energieverzehrenden Bauteils einerseits gewährleistet und andererseits sichergestellt, dass z. B. ein Überlebensraum für die Passagiere des Kraftwagens vorhanden bleibt.

Um die genannten mechanischen Eigenschaften zu gewährleisten, kann es beispielsweise vorgesehen sein, dass die beiden Einzelbauteile aus unterschiedlichen Metalllegierungen hergestellt sind. Natürlich wären auch andere Materialen denkbar. Eine weitere Möglichkeit besteht darin, dass die beiden Bauteile unterschiedliche Wandstärken - gegebenenfalls in Kombination mit unterschiedlichen Werkstoffen - aufweisen, um hierdurch einerseits eine hohe Steifigkeit des einen Bauteils und andererseits eine hohe Duktilität des anderen Bauteils zu erreichen.

Jedoch weist das erfindungsgemäße Karosseriebauteil insgesamt auch verbesserte Steifigkeitseigenschaften auf, da durch die Einzelbauteile ein zumindest zwei Hohlkammern aufweisendes Verbundbauteil geschaffen ist, welches alleine durch seine mehrkammerige Bauweise eine entsprechend hohe Steifigkeit aufweist.

Die Crasheigenschaften und Steifigkeitseigenschaften lassen sich auch durch die formschlüssige Anbindung des ersten und des zweiten Einzelbauteils erzielen, indem nämlich sich eine formschlüssige Fixierung quer zu einer Aufpralleinrichtung der Aufprallkraft ergibt.

In weiterer Ausgestaltung der Erfindung bildet das erste Einzelbauteil den äußeren Teilbereich und das zweite Einzelbauteil den inneren Teilbereich des Verbundbauteils. Hierdurch wird die insbesondere vorteilhafte Wirkung des Karosseriebauteils erzielt, das nämlich der äußere Teilbereich im Falle einer unfallbedingten Kraftbeaufschlagung entsprechend kontrolliert deformiert werden kann, während der andere, innere Teilbereich einerseits zur Abstützung des äußeren Teilbereichs und andererseits zur Aufrechterhaltung eines Überlebensraums der Insassen des Kraftwagens dient.

In weiterer Ausgestaltung der Erfindung hat es sich als zudem vorteilhaft gezeigt, dass zumindest ein, und insbesondere das zweite bzw. innere Einzelbauteil aus einem Strangpressprofil gebildet ist. Durch ein derartiges Strangpressprofil kann ein besonders steifes und dennoch gewichtsgünstiges Einzelbauteil geschaffen werden, durch welches das andere, insbesondere äußere Einzelbauteil entsprechend sicher abgestützt ist, und durch welches ein Überlebensraum im Bereich der Fahrgastzelle für die Insassen gewährleistet werden kann. Eine besonders hohe Steifigkeit des Strangpressprofils kann darüber hinaus erzielt werden, wenn dieses als Mehrkammerprofil mit einer entsprechenden Mehrzahl bzw. Vielzahl von Einzelkammern ausgebildet ist.

Das erste bzw. äußere Einzelbauteil ist in weiterer Ausgestaltung der Erfindung bevorzugt im Querschnitt im Wesentlichen U-förmig ausgebildet, wobei das Einzelbauteil über seine beiden freien Schenkel mit dem zweiten Einzelbauteil verbunden ist. Durch diese beiden freien Schenkel ergibt sich somit eine einfache Möglichkeit, das Crashverhalten bzw. das Energieabsorptionsvermögen des ersten Einzelbauteils einzustellen. Hierzu sind die beiden freien Schenkel in einer bevorzugten Ausführungsform mit einer erhöhten Duktilität zur Absorption der unfallbedingten Aufprallenergie versehen. Mit anderen Worten hat es sich als vorteilhaft gezeigt, wenn insbesondere die beiden freien Schenkel bei einer unfallbedingten Kraftbeaufschlagung deformiert werden, während der diese verbindende Schenkel im Wesentlichen auch nach der unfallbedingten Kraftbeaufschlagung seine Form behält.

Eine besonders vorteilhafte Wirkung des Karosseriebauteifs lässt sich erzielen, wenn das erste oder zweite Einzelbauteil aus unterschiedlichen Werkstoffen gebildet ist. Durch die unterschiedlichen Werkstoffe kann somit auf besonders vorteilhafte Weise einerseits die gewünschte erhöhte Duktilität zur Absorption der unfallbedingten Aufprallenergie und andererseits die hohe Steifigkeit erzielt werden, mittels welcher die bevorzugte Abstützung des anderen Einzelbauteils und die Aufrechterhaltung eines Überlebensraums für die Sitzinsassen gewährleistet werden kann.

In weiterer Ausgestaltung der Erfindung hat es sich als zudem vorteilhaft gezeigt, wenn die wenigstens zwei Einzelbauteile Wände mit unterschiedlichen Wandstärken aufweisen. Hierdurch kann - gegebenenfalls zusätzlich zu der unterschiedlichen Werkstoffwahl - eine zusätzliche Möglichkeit bereitgestellt werden, um die unterschiedlichen Funktionen der beiden Einzelbauteile bereitzustellen.

Ein weiterer Vorteil gegenüber einem konventionellen einteiligen Strangpressprofil es darüber hinaus, dass durch die vorliegend zumindest zwei Einzelbauteile insgesamt die Wandstärken der Wände des Karosseriebauteils reduziert werden können. Da nämlich die beiden Einzelbauteile für sich genommen einen geringeren Querschnitt aufweisen, können diese - beispielsweise in einem Strangpressverfahren - fertigungstechnisch mit einer äußerst geringen Wanddicke gepresst werden. Die Einzelstrangpressprofile können dann auf einfache Weise beispielsweise mittels von Fügverbindungen miteinander verbunden werden, so dass sich insgesamt ein Karosseriebauteil realisieren lässt, welches einerseits beispielsweise einen relativ großen Querschnitt und andererseits demgegenüber relativ geringe Wanddicken aufweist. Insgesamt ist somit ersichtlich, dass mit der vorliegenden Erfindung auch der bislang vorhandene Zielkonflikt gelöst werden kann, nämlich tragende Karosseriebauteile mit einem relativ großen Querschnitt und einer demgegenüber relativ geringen Wanddicke herzustellen. Dies ist jedoch gerade für den Strukturleichtbau von Karosseriebauteilen von erheblicher Wichtigkeit, so dass die Einzelbauteile - und insbesondere das zweite Einzelbauteil - aus einer Legierung mit höherer Festigkeit und geringeren Wanddicken ausgelegt werden kann.

Als weiterhin vorteilhaft hat es sich gezeigt, dass die wenigstens zwei Einzelbauteile mittels einer Fügverbindung zusammengesetzt sind. Durch die Fügverbindung kann dabei insbesondere die Steifigkeit des Verbundbauteils erhöht werden, da sich die beiden Einzelbauteile in optimaler Weise hinsichtlich ihrer statischen und dynamischen Steifigkeit ergänzen. Die formflüssige Verbindung der beiden Einzelbauteile hat darüber hinaus den weiteren Vorteil, dass sich eine besonders zuverlässige Abstützung des energieabsorbierenden ersten Einzelbauteils an dem abstützenden zweiten Einzelbauteil realisieren lässt. So ist durch die formschlüssige Verbindung bei einer unfallbedingten Kraftbeaufschlagung auf besonders zuverlässige Weise sichergestellt, dass eine zusätzliche Fügverbindung oder andere mechanische Verbindung sich nicht lösen kann und demzufolge die Energieabsorption des ersten Einzelbauteils nicht vollständig funktioniert. Vielmehr ist durch die formschlüssige Verbindung in optimaler Weise sichergestellt, dass die gewünschte Energieabsorption des ersten Einzelbauteils über eine maximale Energieabsorptionslänge gewährleistet werden kann.

Weitere Vorteile, Merkmale und Einzelheiten der Erfindung ergeben sich aus der nachfolgenden Beschreibung von zwei bevorzugten Ausführungsbeispielen sowie anhand der Zeichnungen; diese zeigen in:

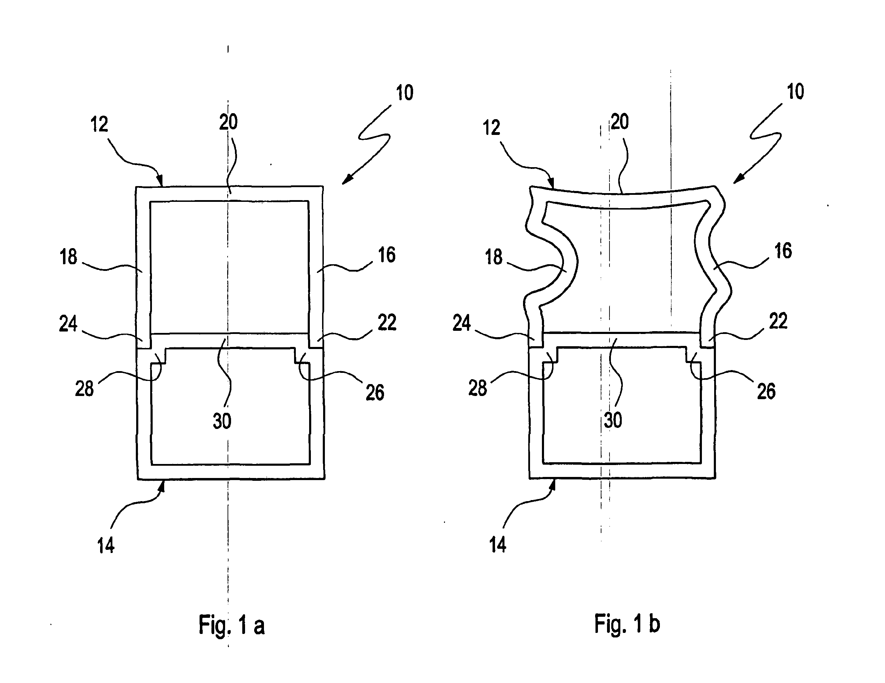

- Fig. 1a, 1b: eine schematische Schnittansicht auf ein aus zwei Einzelbauteilen zusammengesetztes Karosseriebauteil für einen Personenkraftwagen, welche zu einem zwei Hohlkammern aufweisenden Verbundbauteil form- und stoffflüssig zusammengesetzt sind, wobei gemäß Fig. 1b das erste Einzelbauteil eine erhöhte Duktilität zur Absorption einer unfallbedingten Aufprallenergie und das zweite Einzelbauteil eine demgegenüber erhöhte Steifigkeit zur Abstützung des ersten deformierten Einzelbauteils aufweist; und in

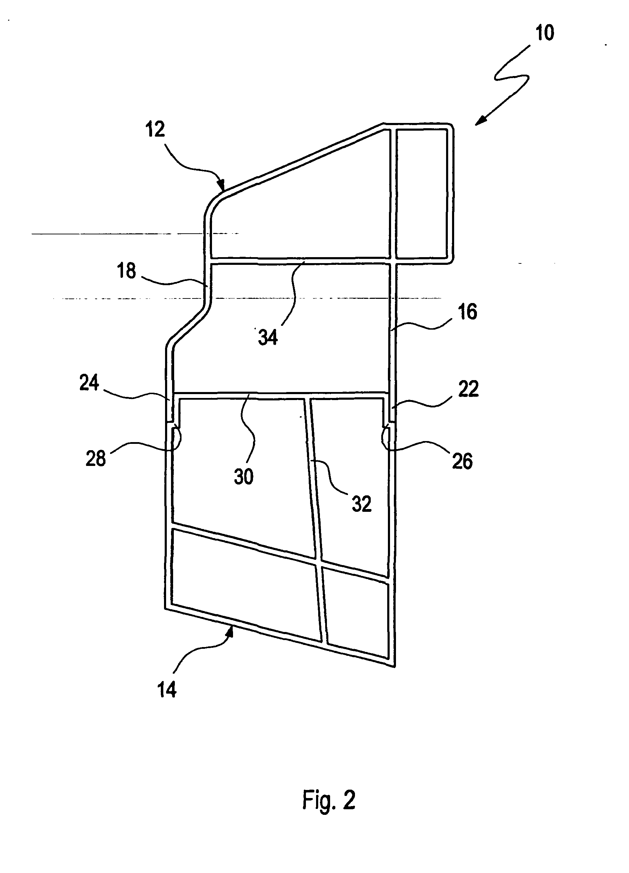

- Fig. 2: eine schematische Schnittansicht durch ein weiteres Karosseriebauteil für einen Personenkraftwegen, dessen beide Einzelbauteile jeweils aus einem mehrere Kammern aufweisenden Strangpressprofil hergestellt ist, wobei die beiden Einzelbauteile form- und stoffschlüssig miteinander zusammengesetzt sind.

In den Fig. 1a und 1b ist jeweils in einer schematischen Schnittansicht ein Karosseriebauteil in Form einer Türsäule 10 - beispielsweise einer B-Säule - dargestellt. Während die Fig. 1 a die Türsäule 10 in undeformiertem Zustand zeigt, ist in Fig. 1b - wie im Weiteren noch näher erläutert werden wird - die Säule 10 nach einer unfallbedingten Kraftbeaufschlagung beispielsweise infolge eines Seitenaufpralls des Personenkraftwagens gezeigt.

Die Türsäule 10 umfasst dabei ein erstes, äußeres Einzelbauteil 12 und ein zweites, inneres Einzelbauteil 14. Mit anderen Worten ist das Einzelbauteil 12 vorliegend der Fahrzeugaußenseite zugewandt und das Einzelbauteil 14 der ansonsten nicht dargestellten Fahrgastzelle des Kraftwagens.

Aus Fig. 1 a ist erkennbar, dass das erste Einzelbauteil 12 im Wesentlichen U-förmig ausgebildet ist und zwei freie Schenkel 16, 18 umfasst, welche über einen Verbindungsschenkel 20 miteinander einstückig verbunden sind. Das äußere Einzelbauteil 12 kann dabei als Strangpressprofil, in Blechschalenbauweise oder aber in einem anderen Herstellungsverfahren hergestellt sein. Als Werkstoffe für das Einzelbauteil 12 eignen sich insbesondere Metalllegierungen, gegebenenfalls wären auch Kunststoffmaterialien denkbar.

Das zweite bzw. innere Einzelbauteil 14 weist vorliegend ein umlaufend geschlossenes Hohlprofil auf und ist in einem Strangpressverfahren hergestellt worden. Dabei umfasst das Einzelbauteil 14 eine im Wesentlichen rechteckförmige Grundkontur. Das Strangpressprofil kann im Wesentlichen aus einer Metalllegierung bestehen. Alternativ wäre es natürlich auch denkbar, das Einzelbauteil aus einem andersartigen Werkstoff, beispielsweise einem Kunststoff, herzustellen.

Während Fig. 1a das durch die beiden Einzelbauteile 12, 14 gebildete Mehrkammerprofil der Türsäule 10 in seinem Ausgangsprofil zeigt, ist in Fig. 1 b die Türsäule 10 nach einer unfallbedingten Kraftbeaufschlagung dargestellt. Bei der vorliegenden Türsäule 10 kann eine derartige unfallbedingte Kraftbeaufschlagung beispielsweise durch einen Seitenaufprall eines anderen Kraftwagens auf in vorliegenden Personenkraftwagen erfolgen.

Es ist erkennbar, dass das äußere bzw. erste Einzelbauteil 12 eine erhöhte Duktilität zur Absorption der unfallbedingten Aufprallenergie aufweist, und demzufolge unter Aufnahme von Aufprallenergie entsprechend verformt worden ist, während das zweite, innere Bauteil 12 eine demgegenüber erhöhte Steifigkeit aufweist und somit im Wesentlichen unverformt bleibt. Eine derartige, erhöhte Duktilität des ersten Einzelbauteils 12 kann beispielsweise durch eine entsprechende Wahl des Werkstoffs gegenüber dem entsprechend steiferen Einzelbauteil 14 erreicht werden. Eine andere Möglichkeit ist es, das Einzelbauteil 12 mit entsprechend anderen, insbesondere geringeren Wandstärken zu versehen, um hierdurch die gewünschte Nachgiebigkeit des Einzelbauteils 12 zu erreichen. Im Umkehrschluss ist das Einzelbauteil 14 entsprechend steifer, beispielsweise aus einem höherfesten Werkstoff gestaltet, so dass sich eine äußerst steife Abstützung des energieabsorbierenden Einzelbauteils 12 realisieren lässt. Durch das nach dem Aufprall weitgehend unverändert gebliebene Einzelbauteil 14 kann darüber hinaus sichergestellt werden, dass die Türsäule 10 im Wesentlichen nicht oder zumindest nicht übermäßig in Richtung der Fahrgastzelle bzw. in Richtung der Sitzinsassen deformiert wird. Hierdurch ist der Sitzinsasse in optimaler Weise bei einem Seitenaufprall geschützt.

Aus den Fig. 1 a und 1 b ist darüber hinaus erkennbar, dass im Wesentlichen die beiden freien Schenkel 16, 18 die erhöhte Duktilität des ersten Einzelbauteils 12 aufweisen. Hierdurch wird erreicht, dass die beiden Schenkel 16, 18 im Wesentlichen die Aufprallenergie absorbieren, während der Verbindungsschenkel 20 in seiner Form im Wesentlichen erhalten bleibt. Es ist klar, dass demzufolge sich die Schenkel 16, 18 im Wesentlichen in Aufprallrichtung bzw. in Richtung der Krafteinleitung erstrecken.

Des Weiteren ist aus den Fig. 1a und 1b erkennbar, dass die freien Enden 22, 24 der freien Schenkel 16, 18 im Wesentlichen formschlüssig mit korrespondierenden Stufen 26, 28 des inneren Einzelbauteils 14 verbunden sind. Mit anderen Worten sind die beiden freien Enden 22, 24 so voneinander beabstandet, dass sich eine formschlüssige Fixierung des ersten Einzelbauteils 12 gegenüber dem zweiten Einzelbauteil 14, insbesondere quer zur Aufprallrichtung der Aufprallkraft ergibt. Hierdurch ist bei einer unfallbedingten Kraftbeaufschlagung sichergestellt, dass das erste Einzelbauteil 12 sicher am zweiten Einzelbauteil 14 verbleibt. Dabei umgreifen die beiden freien Enden 22, 24 einen korrespondierenden Wandabschnitt 30 zwischen den beiden Stufen 26, 28 des Einzelbauteils 14.

Im vorliegenden Ausführungsbeispiel sind die beiden Einzelbauteile 12, 14 darüber hinaus durch eine Fügverbindung - insbesondere eine Kleb- oder Schweißverbindung - miteinander zusammengesetzt. Der Vorteil einer Klebverbindung besteht dabei insbesondere darin, dass diese einfach herstellbar ist und eine hohe Verbindungsqualität aufweist. Als im besonderen Maße vorteilhaft hat es sich darüber hinaus gezeigt, wenn die beiden Einzelbauteile 12, 14 durch eine Schweißverbindung, und insbesondere durch eine Reibrührschweißverbindung miteinander zusammengefügt sind. Derartige Reibrührschweißverbindungen stellen eine besonders einfache und saubere Möglichkeit zur Verbindung von Leichtmetalllegierungen dar. Im Vergleich zu konventionellen Fügverfahren sind sie aufgrund der hohen Nahtfestigkeit besonders stabil, so dass sich eine beträchtliche Gewichtseinsparung realisieren lässt. Ein weiterer Vorteil des Reibrührschweißens ist es, dass dabei Temperaturen vorzugsweise unterhalb des Schmelzpunktes der zu verbindenden Leichtmetalllegierungen erreicht werden, so dass sich eine nachteilige Gefügeveränderung beim Erstarren der Schmelze vermeiden lässt. Somit ist es in besonderer Weise auch möglich, allgemein als schwer oder bedingt schmelzbar klassifizierte höherfeste Aluminiumlegierungen ohne Zusatzwerkstoff und ohne großen Festigkeitsverlust zu verschweißen. Schließlich ist ein besonderer Vorteil, dass derartige Reibrührschweißprozesse eine relativ geringe maschinelle Ausrüstung und demzufolge geringe Investitionskosten erfordern. Als im Rahmen der Erfindung mitumfasst ist es jedoch zu betrachten, dass auch andere Schweißverfahren, insbesondere das Laserschweißen oder das MIG-Schweißen, eingesetzt werden können. Gleichfalls denkbar ist es, die vorliegende Steckverbindung zwischen den freien Enden 22, 24 und den Stufen 26, 28 durch Rastverbindungen oder Clipverbindungen zu sichern. Natürlich wäre es auch denkbar, die beiden Einzelbauteile 12, 14 mechanisch miteinander zu verbinden.

Insgesamt ist es aus den Fig. 1 a und 1 b jedoch erkennbar, dass die freien Enden 22, 24 bei einer unfallbedingten Kraftbeaufschlagung direkt an den korrespondierenden Stufen 26, 28 abgestützt sind. Ein Wegrutschen der freien Enden 22, 24 über die Stufen 26, 28 hinaus wird dabei insbesondere durch die besagte Fügverbindung vermieden. Somit ergibt sich die erwünschte sehr gute Abstützung für das Einzelbauteil 12, so dass sich dieses insbesondere unter Deformation der beiden Schenkel 16, 18 entsprechend verformen kann.

Ein weiterer Vorteil der vorliegenden Türsäule 10 ist es, dass die Wanddicken des zusammengesetzten Mehrkammerprofils viel variabler ausgelegt werden können, als wenn der Verbund aus lediglich einem Profil stranggepresst wird. Dies insbesondere aufgrund der Tatsache, dass einstückig gepresste Profile eine Mindestwanddicke aufweisen müssen, die sich an dem umschriebenen Kreis des Bauteils bemisst. Steigt demzufolge der Querschnitt eines derartigen Bauteils, so muss entsprechend die Mindestwanddicke einem derartigen einstückigen Profil erhöht werden. Im Unterschied hierzu können die Wanddicken bei den beiden Einzelbauteilen 12, 14 entsprechend gering gewählt werden, wobei sich nach Zusammensetzen der beiden Einzelbauteile 12, 14 die für das Gesamtbauteil - die Türsäule 10 - vorteilhaften geringen Wanddicken ergeben. Somit ergibt sich in vorteilhafter Weise eine mögliche Gewichtseinsparung bei hoher Steifigkeit der Türsäule 10. Insbesondere ergibt sich auch die Möglichkeit, das erste Einzelbauteil 12 mit erhöhter Duktilität entsprechend mit geringeren Wanddicken auszubilden als das abstützende zweite Einzelbauteil 14.

In Fig. 2 ist in einer schematischen Schnittansicht ein weiteres Karosseriebauteil 10 gezeigt, welches sich insbesondere dadurch auszeichnet, dass die beiden Einzelbauteile 12, 14 jeweils als mehrkammerige Strangpressprofile ausgebildet sind. Das äußere Einzelbauteil 12 weist wiederum zwei freie Schenkel 16, 18 auf, deren freie Enden 22, 24 sich wiederum an korrespondierenden Stufen 26, 28 des zweiten Einzelbauteils 14 mit hoher Steifigkeit abstützen. Somit wird auch im vorliegenden Fall wiederum ein Karosseriebauteil 10 realisiert, bei welchem das erste, äußere Einzelbauteil 12 entsprechend nachgiebig mit hoher Duktilität ausgebildet ist und das zweite Einzelbauteil 14 eine demgegenüber erhöhte Steifigkeit aufweist. Dies wird im vorliegenden Fall unter anderem auch dadurch erreicht, dass die beiden Einzelbauteile 12, 14 eine entsprechende Kammeranordnung besitzen. Während nämlich das steifere Einzelbauteil 14 eine quer zur wesentlichen Aufprallrichtung verlaufende Wand 32 aufweist, ist eine solche beim Einzelbauteil 12 mit hoher Duktilität nicht gegeben. Vielmehr läuft die dortige Wand 34 im Wesentlichen quer zu einer Hauptaufprallrichtung im Falle eines Seitenaufpralls eines anderen Personenkraftwagens.

## Patentansprüche

1. Karosseriebauteil für einen Kraftwagen, welches aus wenigstens einem ersten und einem zweiten Einzelbauteil (12, 14) zu einem eine Mehrzahl von Hohlkammern aufweisenden Verbundbauteil (10) zusammengesetzt ist, wobei das erste Einzelbauteil (12) eine gegenüber dem zweiten Einzelbauteil (14) erhöhte Duktilität zur Absorption einer unfallbedingten Aufprallenergie und das zweite Einzelbauteil (14), das zur Abstützung des ersten Einzelbauteils (12) ausgebildet ist, eine demgegenüber erhöhte Steifigkeit aufweist, wobei das erste und das zweite Einzelbauteil (12, 14) aus unterschiedlichen Werkstoffen gebildet sind,
**dadurch gekennzeichnet, dass**
freie Enden (22, 24) von freien Schenkeln (16, 18) des ersten Einzelbauteils (12) formschlüssig mit korrespondierenden Stufen (26, 28) des zweiten Einzelbauteils (14) verbunden sind.

2. Karosseriebauteil nach Anspruch 1,
**dadurch gekennzeichnet, dass**
das erste Einzelbauteil (12) den äußeren Teilbereich und das zweite Einzelbauteil (14) den inneren Teilbereich des Verbundbauteils (10) bildet.

3. Karosseriebauteil nach einem der Ansprüche 1 oder 2,
**dadurch gekennzeichnet, dass**
zumindest ein, und insbesondere das zweite bzw. innere Einzelbauteil (14) aus einem Strangpressprofil gebildet ist.

4. Karosseriebauteil nach einem der Ansprüche 1 bis 3,
**dadurch gekennzeichnet, dass**
zumindest das Strangpressprofil als Mehrkammerprofil ausgebildet ist.

5. Karosseriebauteil nach einem der Ansprüche 1 bis 4,
**dadurch gekennzeichnet, dass**
das erste Einzelbauteil (12) im Querschnitt im Wesentlichen U-förmig ausgebildet ist, wobei das Einzelbauteil (12) über seine beiden freien Schenkel (16, 18) mit dem zweiten Einzelbauteil (14) verbunden ist.

6. Karosseriebauteil nach einem der Ansprüche 1 bis 5,
**dadurch gekennzeichnet, dass**
insbesondere die beiden freien Schenkel (16, 18) des ersten Einzelbauteils (12) eine erhöhe Duktilität zur Absorption einer unfallbedingten Aufprallenergie aufweisen.

7. Karosseriebauteil nach einem der Ansprüche 1 bis 6,
**dadurch gekennzeichnet, dass**
das erste und das zweite Einzelbauteil (12, 14) Wände mit unterschiedlichen Wandstärken aufweisen.

8. Karosseriebauteil nach einem der Ansprüche 1 bis 7,
**dadurch gekennzeichnet, dass**
die wenigstens zwei Einzelbauteile (12, 14) zusätzlich mittels einer Fügverbindung zusammengesetzt sind.

9. Karosseriebauteil nach Anspruch8,
**dadurch gekennzeichnet, dass**
die Einzelbauteile (12, 14) durch eine Kleb- oder Schweißverbindung, insbesondere eine Reibrührschweißverbindung miteinander verbunden sind.

## Claims

1. Body part for a motor vehicle, comprising a composite component (10) having at least first and second individual parts (12, 14) and having a plurality of hollow chambers, wherein the first individual part (12) has increased ductility relative to the second individual part (14) for the absorption of impact energy resulting from an accident, and wherein the second individual part (14), which is designed to support the first individual part (12) has, on the other hand, increased stiffness, wherein the first and second individual parts (12, 14) are formed from different materials, **characterised in that** the free ends (22, 24) of the free legs (16, 18) of the first individual part (12) are form-fitted to corresponding steps (26, 28) of the second individual part (14).

2. Body part according to claim 1, **characterised in that** the first individual part (12) forms the outer partial region while the second individual part (14) forms the inner partial region of the composite component (10).

3. Body part according to one of the claims 1 or 2, **characterised in that** at least one, and, in particular, the second or inner individual part (14) is formed from an extruded profile.

4. Body part according to one of the claims 1 to 3, **characterised in that** at least the extruded profile is designed as a multi-chamber profile.

5. Body part according to one of the claims 1 to 4, **characterised in that** the first individual part (12) is formed substantially U-shaped in cross-section, wherein the individual part (12) is connected via its two free legs (16,18) with the second individual part (14).

6. Body part according to one of the claims 1 to 5, **characterised in that** in particular the two free legs (16, 18) of the first individual part (12) have an increased ductility for absorbing impact energy resulting from an accident.

7. Body part according to one of the claims 1 to 6, **characterised in that** the first and second individual parts (12, 14) have walls with different wall thicknesses.

8. Body part according to one of the claims 1 to 7, **characterised in that** the at least two individual parts (12, 14) are assembled in addition by means of a joint connection.

9. Body part according to claim 8. **characterised in that** the individual parts (12, 14) are connected together by an adhesive or welded connection, in particular a friction stir welded joint.

## Revendications

1. Élément de carrosserie pour un véhicule automobile, qui est composé d'au moins un premier et un deuxième élément simple (12, 14) pour former un élément composé (10) comportant une multiplicité de chambres creuses, le premier élément simple (12) ayant une ductilité accrue par rapport au deuxième élément simple (14) pour absorber une énergie de collision due à un accident et le deuxième élément simple (14), qui est conçu pour soutenir le premier élément simple (12), ayant une rigidité accrue par rapport à celui-ci, le premier et le deuxième élément simple (12, 14) étant constitués de matériaux différents,
**caractérisé en ce que** des extrémités libres (22, 24) de branches libres (16, 18) du premier élément simple (12) sont assemblées par concordance de forme à des gradins correspondants (26, 28) du deuxième élément simple (14).

2. Élément de carrosserie selon la revendication 1, **caractérisé en ce que** le premier élément simple (12) forme la zone partielle extérieure et le deuxième élément simple (14) forme la zone partielle intérieure de l'élément composé (10).

3. Élément de carrosserie selon l'une des revendications 1 ou 2, **caractérisé en ce qu'**au moins un élément simple, et notamment le deuxième élément simple respectivement l'élément simple intérieur (14), est formé à partir d'un profilé filé.

4. Élément de carrosserie selon l'une des revendications 1 à 3, **caractérisé en ce qu'**au moins le profilé filé est conçu comme un profilé à chambres multiples.

5. Élément de carrosserie selon l'une des revendications 1 à 4, **caractérisé en ce que** le premier élément simple (12) est conçu globalement en forme de U en coupe transversale, l'élément simple (12) étant assemblé par l'intermédiaire de ses deux branches libres (16, 18) au deuxième élément simple (14).

6. Élément de carrosserie selon l'une des revendications 1 à 5, **caractérisé en ce que** notamment les deux branches libres (16, 18) du premier élément simple (12) ont une ductilité accrue pour l'absorption d'une énergie de collision due à un accident.

7. Élément de carrosserie selon l'une des revendications 1 à 6, **caractérisé en ce que** le premier et le deuxième élément simple (12, 14) comportent des parois ayant des épaisseurs différentes.

8. Élément de carrosserie selon l'une des revendications 1 à 7, **caractérisé en ce que** les au moins deux éléments simples (12, 14) sont assemblés en plus au moyen d'un assemblage jointé.

9. Élément de carrosserie selon la revendication 8, **caractérisé en ce que** les éléments simples (12, 14) sont assemblés l'un à l'autre par un assemblage collé ou soudé, notamment par un assemblage soudé par friction et malaxage.
